(19) Europäisches Patentamt
European Patent Office
Office européen des brevets

(11) **EP 3 561 395 B1**

(12) **EUROPÄISCHE PATENTSCHRIFT**

(45) Veröffentlichungstag und Bekanntmachung des Hinweises auf die Patenterteilung:
**13.05.2020   Patentblatt 2020/20**

(51) Int Cl.:
*F24D 11/00* (2006.01)     *F24D 19/10* (2006.01)
*F24D 10/00* (2006.01)

(21) Anmeldenummer: **18169984.4**

(22) Anmeldetag: **27.04.2018**

(54) **ANORDNUNG UND VERFAHREN ZUR STEUERUNG DER BELADUNG EINES PUFFERSPEICHERS FÜR EINE FERNWÄRMEABNEHMERSEITE UND FERNWÄRMEÜBERGABESTATION**

ASSEMBLY AND METHOD FOR CONTROLLING THE LOADING OF BUFFER STORAGE FOR A DISTRICT HEATING CONSUMER AND DISTRICT HEATING DISTRIBUTION STATION

DISPOSITIF ET PROCÉDÉ DE COMMANDE DU CHARGEMENT D'UN RÉSERVOIR TAMPON POUR UN CONSOMMATEUR DE CHAUFFAGE URBAIN ET INSTALLATION DE TRANSFERT DE CHAUFFAGE URBAIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.10.2019   Patentblatt 2019/44**

(73) Patentinhaber: **Aqotec GmbH**
**4890 Weissenkirchen im Attergau (AT)**

(72) Erfinder: **Holzinger, Christian**
**5211 Friedburg (AT)**

(74) Vertreter: **2s-ip Schramm Schneider Bertagnoll Patent- und Rechtsanwälte Part mbB**
**Postfach 86 02 67**
**81629 München (DE)**

(56) Entgegenhaltungen:
**DE-A1- 3 312 479     DE-A1- 3 835 096**
**DE-A1- 4 404 856     DE-A1-102011 011 022**

**Beschreibung**

Die Erfindung betrifft eine Anordnung und ein Verfahren zur Steuerung der Beladung eines Pufferspeichers für eine Fernwärmeabnehmerseite sowie einen Pufferspeicher für eine Fernwärmeabnehmerseite sowie eine Fernwärmeübergabestation.

In Fernwärmenetzen dienen Pufferspeicher auf der Fernwärmeabnehmerseite, also in dem mit Fernwärme zu versorgenden Bauwerk, dazu, Wärmebedarfsschwankungen des Bauwerks zu glätten. Diese Pufferspeicher sind auf der Fernwärmeabnehmerseite hinter der Wärmeübergabestelle, welche die Schnittstelle zwischen dem Versorgungsnetz und dem zu versorgenden Bauwerk bildet, angeordnet und werden über einen Vorlaufanschluss mit dem "heißen" Wärmeträgermedium von der Wärmeübergabestelle her beladen. Die Abfuhr des "kalten" Wärmeträgermediums zurück in Richtung der Wärmeübergabestelle bzw. das Versorgungsnetz erfolgt über einen Rücklaufanschluss. Die Wärmeübergabestelle im zu versorgenden Bauwerk wird durch eine Fernwärmeübergabestation gebildet. Diese umfasst einen Wärmetauscher, eine Regelung für die Wärmezufuhr aus dem Fernwärmeversorgungsnetz und für die Abfuhr auf der Fernwärmeabnehmerseite, also in Richtung des zu versorgenden Bauwerks, und kann auch einen Pufferspeicher umfassen.

Um einen wirtschaftlichen Betrieb des Fernwärmenetzes sicher zu stellen, ist es vorteilhaft, den Pufferspeicher nicht nur als statischen Speicher zu betreiben, er soll vielmehr dynamisches Verhalten ausregeln. Dadurch werden Wärmebedarfsspitzen im Netz geglättet, was wiederum zu einer besseren Betriebsweise führt.

Schichtenspeicher haben die Eigenschaft, dass die Durchmischung des Wärmeträgermediums im Speicher möglichst gering gehalten wird. Somit gibt es ein signifikantes Temperaturgefälle in vertikaler Richtung zwischen der obersten Schicht, wo das heiße Wärmeträgermedium zugeführt wird, und der untersten Schicht, von wo das abgekühlte Wärmeträgermedium abgeführt wird.

Speziell bei einem Schichten-Pufferspeicher ist der Vorlaufanschluss ganz oben am Pufferspeicher, während der Rücklaufanschluss ganz unten am Pufferspeicher angeordnet ist. Gestartet und beendet wird das Beladen typischerweise über das Ein- und Ausschalten einer Ladepumpe oder - bei kleineren Anlagen mit kleiner Ladepumpe - über das Öffnen und Schließen eines Ventils im Ladekreis gegen die ständig laufende Ladepumpe.

Die Steuerung der Beladung des Pufferspeichers mit dem Wärmeträgermedium erfolgt im Stand der Technik in der Weise, dass die Beladung gestartet wird, wenn die Temperatur am Rücklaufanschluss einen vorbestimmten Wert unterschreitet, und die Beladung beendet wird, wenn die Temperatur am Vorlaufanschluss einen vorbestimmten Wert übersteigt.

Hierzu umfasst eine bekannte Anordnung zur Steuerung der Beladung eines Pufferspeichers für eine Fernwärmeabnehmerseite, wobei der Pufferspeicher einen Vorlaufanschluss zum Zuführen eines Wärmeträgermediums und einen Rücklaufanschluss zum Abführen des Wärmeträgermediums aufweist, einen ersten Temperatursensor, der zur Erfassung einer ersten Temperatur des Wärmeträgermediums beim Vorlaufanschluss ausgestaltet ist und einen zweiten Temperatursensor, der zur Erfassung einer zweiten Temperatur des Wärmeträgermediums beim Rücklaufanschluss ausgestaltet ist, wobei die Steuerung der Beladung des Pufferspeichers in Abhängigkeit von der ersten Temperatur und der erfassten zweiten Temperatur erfolgt.

Nachteilig an dieser Anordnung ist, dass die Temperatur des Wärmeträgermediums im Pufferspeicher und speziell in den Schichten in der Nähe des Rücklaufanschlusses zunächst noch weiter sinkt, obwohl das Beladen mit dem Wärmeträgermedium bereits begonnen hat. Dies deshalb, weil es vor allem beim Schichtenspeicher eine gewisse Zeit braucht, bis die Wärme auch in die tieferen Schichten des Pufferspeichers vorgedrungen ist.

DE 33 12 479 A1 betrifft einen Warmwasser-Schichtenspeicher mit einer Regeleinrichtung, der die gewünschte Wassertemperatur als Führungsgröße eingegeben wird, und die von einem Fühler bestimmte Temperatur des in den Speicherbehälter zurückgeleiteten Wassers wird als Regelgröße zugeführt. Die Regeleinrichtung steuert die Drehzahl der Umwälzpumpe als Stellgröße. Weitere am Boden des Speicherbehälters und in einer vorgegebenen Höhe über dem Boden angeordnete Fühler schalten den Ladevorgang aus und ein.

DE 38 35 096 A1 betrifft eine Anordnung gemäß dem Oberbegriff des Anspruchs 1.

Aufgabe der Erfindung ist es, eine Anordnung, einen Pufferspeicher, eine Fernwärmeübergabestation und ein Verfahren zur Steuerung der Beladung bereitzustellen, welche diesen Nachteil zumindest teilweise beheben.

Diese Aufgabe wird durch die Anordnung, den Pufferspeicher, die Fernwärmeübergabestation und das Verfahren mit den Merkmalen der jeweiligen Ansprüche gelöst.

Weil die erfindungsgemäße Anordnung zumindest einen weiteren Temperatursensor aufweist, der zur Erfassung einer weiteren Temperatur im Pufferspeicher zwischen Vorlaufanschluss und Rücklaufanschluss ausgestaltet ist, und die zumindest eine weitere Temperatur in die Beladungssteuerung eingeht, kann bereits zu einem früheren Zeitpunkt in die Beladungssteuerung eingegriffen und über ein Ein- oder Ausschalten der Beladung entschieden werden. Denn im Schichtenspeicher an einer Stelle zwischen dem Vorlaufanschluss und dem Rücklaufanschluss, also dort, von wo die Wärmabfuhr in Richtung der Verbraucher erfolgt, wird eine Temperaturänderung früher messbar als am Vorlaufanschluss bzw. Rücklaufanschluss selbst. Speziell bei einer stärkeren Temperaturänderung aufgrund sich stärker ändernden Wärmebedarfs der Wärmeabnehmerseite kann damit besser verhindert werden, dass die Temperaturen im Pufferspeicher zu stark schwanken.

Vor allem lässt sich besser verhindern, dass z.B. aufgrund einer zu lang andauernden oder zu spät einsetzenden Beladung des Pufferspeichers mit Wärme die Rücklauftemperatur zu stark ändert. In Fernwärmeversorgungsnetzen soll gerade eine zu hohe Rücklauftemperatur aus Gründen der Wirtschaftlichkeit vermieden werden.

Zumindest einer der weiteren Temperatursensor kann an einer äußeren Wand des Schichten-Pufferspeichers angeordnet sein und somit indirekten Kontakt zu dem Wärmeträgermedium haben, er kann aber auch im Innern des Schichten-Pufferspeichers mit direktem Kontakt zu dem Wärmeträgermedium untergebracht sein. Sinngemäß das Gleiche gilt für den ersten und den zweiten Temperatursensor.

Die tatsächlich erfassten Temperatur-Messwerte können mittels Gewichtungen korrigiert werden, z.B. wenn die Temperatursensoren lediglich indirekten Kontakt zu dem Wärmeträgermedium haben.

Anordnung des zumindest einen weiteren Temperatursensors zwischen Vorlaufanschluss und Rücklaufanschluss soll heißen, dass sich der zumindest eine weitere Temperatursensor nicht an einer Stelle bzw. Schicht befindet, wo bereits der erste Temperatursensor oder der zweite Temperatursensoren angeordnet ist. Somit werden mittels des zumindest einen weiteren Temperatursensors Temperaturen einer oder mehrerer davon unterschiedlicher Stellen oder Schichten im Schichten-Pufferspeicher erfasst. Alle Temperatursensoren sind letztlich an voneinander unterschiedlichen vertikalen Stellen / Schichten an /im Schichten-Pufferspeicher angeordnet.

Erfindungsgemäß sind die zwei weiteren Temperatursensoren folgendermaßen vorgesehen: einer, der näher beim Vorlaufanschluss als der andere ist, und einer, der näher beim Rücklaufanschluss als der andere ist. Somit werden Temperaturen des Wärmeträgermediums in vier verschiedenen vertikalen Stellen (Schichten) im Schichten-Pufferspeicher erfasst.

Dann kann sowohl über den Start der Beladung als auch über das Beenden der Beladung mit dem Wärmeträgermedium besser entschieden werden, so dass Temperaturschwankungen im Pufferspeicher sowohl nach unten als auch nach oben besser eingegrenzt werden können.

Die Anordnung ist erfindungsgemäß ausgestaltet, die Beladung des Schichten-Pufferspeichers mit dem Wärmeträgermedium zu starten, wenn der eine weitere Temperatursensor eine Temperatur erfasst, die eine vorbestimmte untere Grenztemperatur unterschreitet, und die Beladung zu beenden, wenn der andere weitere Temperatursensor eine Temperatur erfasst, die eine vorbestimmte obere Grenztemperatur überschreitet. Hierbei können die vorbestimmte obere Grenztemperatur unterhalb eines oberen Grenzwertes der ersten Temperatur und die vorbestimmte untere Grenztemperatur oberhalb eines unteren Grenzwertes der zweiten Temperatur sein.

Diese erfindungsgemäße Anordnung lässt sich überdies besonders vorteilhaft dazu nutzen, die Beladung mit dem Wärmeträgermedium nicht nur binär entweder an- oder abzustellen sondern auch verstärken bzw. abzuschwächen. Es kann also die Beladungsrate kontinuierlich und stufenlos variiert werden.

Dann lässt sich der Beladungsvorgang, also die Beladungsrate, z.B. vor Erreichen einer vorbestimmten oberen Grenztemperatur am Vorlaufanschluss bereits abschwächen und vor Erreichen der unteren Grenztemperatur am Rücklaufanschluss einleiten. Dies führt zu einer weiteren Glättung des Beladungsvorgangs über der Zeit und damit zu schwächeren Temperaturgradienten im Pufferspeicher und den Zu- und Ablaufleitungen.

Es kann eine Regelungseinrichtung vorgesehen sein, welche die Beladung entsprechend einer Kennlinienfunktion einstellt, die gewichtete Differenzen der einzelnen erfassten Temperaturen zu vordefinierten Temperatur-Sollwerten, insbesondere eine Summe der gewichteten Differenzen, mit Beladungsraten verknüpft.

Hierbei kann vorgesehen sein, dass die Differenzen nur dann berücksichtigt werden, wenn sie außerhalb eines jeweiligen vorgegebenen Toleranzbereichs liegen.

Auch können Mittel zur Einstellung der Beladungsrate über den Öffnungsgrad eines Ventils vorgesehen sein.

Idealerweise kann so ein ständiges Beladen mit niedriger Beladungsrate durchgeführt werden, ohne dass die Beladung vollständig abgestellt werden muss. Die Ladepumpe kann also ununterbrochen in Betrieb gehalten werden. Dies ist z.B. bei größeren Anlagen von Vorteil, deren Ladepumpen nicht gegen Schließventile arbeiten können oder sollen, beugt generell dem Steckenbleiben der Ladepumpe und allzu großen Strömungsschwankungen im Ladekreis vor.

Die Erfindung umfasst auch Mittel zur Übertragung einer Information über die zumindest eine weitere erfasste Temperatur an eine Fernwärmeerzeugerseite vorgesehen ist.

Die erfindungsgemäße Anordnung kann mit einem speziell angepassten Schichten-Pufferspeicher kombiniert werden, kann aber auch mit einem bereits im zu versorgenden Bauwerk vorhandenen Schichten-Pufferspeicher kombiniert werden, also nachträglich dort angeordnet und angepasst werden. Die Anpassung der Temperatursensoren an einen bereits vorhandenen Pufferspeicher (Bestands-Pufferspeicher) kann über die einzelnen Gewichtungsfaktoren erfolgen.

Ferner gemäß der Erfindung bereitgestellt ist eine Fernwärmeübergabestation umfassend einen Wärmetauscher, der zwischen Fernwärmeabnehmerseite und einem Fernwärmeversorgungsnetz angeordnet ist, sowie einen Schichten-Pufferspeicher mit der wie zuvor beschriebenen Anordnung, wobei der Schichten-Pufferspeicher auf der Fernwärmeabnehmerseite angeordnet ist.

Die Erfindung wird im Folgenden anhand von Ausführungsbeispielen und der Zeichnung näher beschrieben. In der Zeichnung zeigen:

Fig. 1 eine Anordnung mit zwei Temperatursensoren, wie im Stand der Technik bekannt,

Fig. 2 eine Anordnung gemäß einem Ausführungsbeispiel der Erfindung mit zwei zusätzlichen Temperatursensoren,

Fig. 3 eine Gegenüberstellung von Sollwerten an den einzelnen Temperatursensoren zu beispielsweisen Istwerten,

Fig. 4 eine Kennlinienfunktion der Pumpendrehzahl über den gewichteten erfassten Temperaturen,

Fig. 5 eine Gegenüberstellung der Pumpendrehzahl (Beladungsrate) einer Steuerung/Regelung auf der Basis zweier Temperatursensoren des Standes der Technik (Kurve A) und einer Steuerung/Regelung auf der Basis von vier Temperatursensoren gemäß einem Ausführungsbeispiel der Erfindung (Kurve B) und

Fig. 6 eine Fernwärmeübergabestation mit einem Pufferspeicher und einer Regelung gemäß der Erfindung.

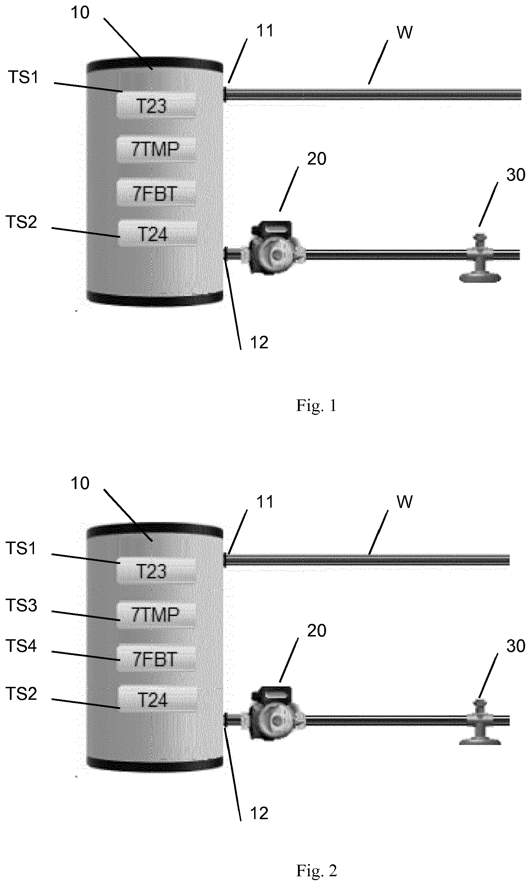

Fig. 1 zeigt eine Anordnung gemäß dem Stand der Technik in Kombination mit einem Pufferspeicher 10, der als Schichtenspeicher ausgestaltet ist. Illustriert ist in Fig. 1 lediglich die Primärseite des Schichten-Pufferspeichers, also diejenige Seite, die das Beladen des Pufferspeichers 10 mit dem Wärmeträgermedium W, in der Regel Heißwasser, betrifft. Der Pufferspeicher 10 umfasst einen Vorlaufanschluss 11 und einen Rücklaufanschluss 12, über welche der Pufferspeicher 10 mit der Fernwärmeübergabestation 50 verbunden ist. Das heiße Wärmeträgermedium wird durch den Vorlauf von der Wärmeübergabestelle 50 zugeführt. Das abgekühlte Wärmeträgermedium wird über den Rücklauf zur Wärmeübergabestelle 50 zurückgeführt. Üblicherweise im Vorlauf oder im Rücklauf ist eine Pumpe 20 und/oder ein Ventil 30 angeordnet, über welche die Beladung des Pufferspeichers 10 gesteuert wird.

Die Anordnung zur Steuerung der Beladung des Pufferspeichers 10 gemäß dem Stand der Technik umfasst einen ersten Temperatursensor TS1, der zur Erfassung einer ersten Temperatur T23 des Wärmeträgermediums beim Vorlaufanschluss 11 ausgestaltet ist, und einen zweiten Temperatursensor TS2, der zur Erfassung einer zweiten Temperatur T24 des Wärmeträgermediums beim Rücklaufanschluss 12 ausgestaltet ist. Die Steuerung der Beladung des Pufferspeichers 10 erfolgt in Abhängigkeit von der erfassten ersten Temperatur T23 und der erfassten zweiten Temperatur T24. Unterschreitet die Temperatur am Rücklaufanschluss 12 einen unteren Grenzwert, so wird die Pumpe 20 eingeschaltet oder das Ventil 30 geöffnet, so dass das Wärmeträgermedium, also in der Regel Heißwasser, im Primärkreis zirkulieren kann und dem Pufferspeicher 10 Wärme zugeführt wird. Der Beladungsvorgang wird gestartet. Erreicht die Temperatur T23 am Vorlaufanschluss 11 einen oberen Grenzwert, so wird die Pumpe 20 abgestellt oder das Ventil 30 geschlossen. Der Beladungsvorgang ist beendet.

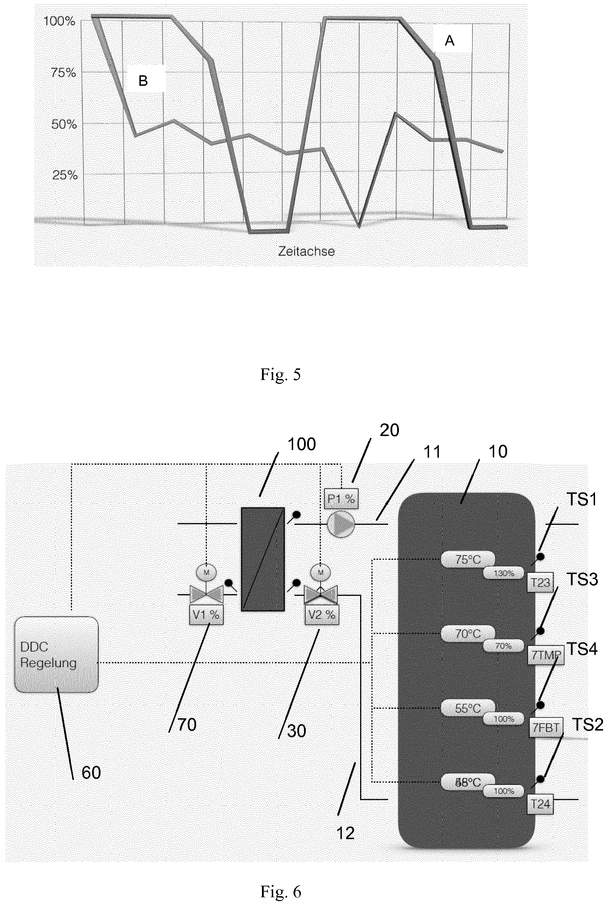

Einen beispielsweisen Verlauf des Beladungsvorgangs, also des Ein- und Ausschaltvorgangs der Pumpe 20 über der Zeit, zeigt in Fig. 5 die Kurve A für diese bekannte Anordnung. Es wird im Wesentlichen zwischen 0 und 100% der Pumpendrehzahl hin- und hergeschaltet. Die Pumpendrehzahl ist gleichbedeutend mit der Beladungsrate.

Fig. 2 zeigt eine Anordnung gemäß einem Ausführungsbeispiel der Erfindung in Kombination mit einem Pufferspeicher 10, der ebenfalls als Schichtenspeicher ausgestaltet ist. Illustriert ist wiederum lediglich die Primärseite, also diejenige Seite, die das Beladen des Pufferspeichers 10 mit Wärme von der Fernwärmeübergabestation 50 betrifft. Die Anordnung gleicht zunächst derjenigen der Fig. 1 wie zuvor beschrieben. In die Steuerung der Beladung des Pufferspeichers 10 gehen wiederum die vom ersten Temperatursensor TS1 erfasste erste Temperatur T23 und die vom zweiten Temperatursensor TS2 erfasste zweite Temperatur T24 ein.

Des Weiteren umfasst die Anordnung zwei weitere Temperatursensoren TS3, TS4, die zur Erfassung weiterer Temperaturen 7TMP, 7FBT des Wärmeträgermediums im Schichten-Pufferspeicher 10 zwischen Vorlaufanschluss 11 und Rücklaufanschluss 12 ausgestaltet sind. Diese beiden weiteren im Schichten-Pufferspeicher erfassten Temperaturen 7TMP, 7FBT gehen ebenfalls in die Steuerung der Beladung ein. Der eine weitere Temperatursensor TS3 ist näher am Vorlaufanschluss 11 angeordnet als der andere weitere Temperatursensor TS4, der seinerseits näher am Rücklaufanschluss 12 angeordnet ist als der eine weitere Temperatursensor TS3. Die Anordnung umfasst also vier Temperatursensoren TS1, TS2, TS3, TS4, die im Wesentlichen vertikal übereinander angeordnet sind, also in vier verschiedenen Schichten des Schichtenspeichers die Temperaturen T23, 7TMP, 7FBT und T24 erfassen.

Mittels dieser Anordnung können also Temperaturen an vier verschiedenen Stellen im Pufferspeicher 10 erfasst werden. Mit den beiden weiteren Temperatursensoren TS3, TS4 ergibt sich ein besseres Bild der Wärmeverteilung über die Schichten im Pufferspeicher 10 und damit auch der Wärmebedarfsentwicklung auf der Sekundärseite.

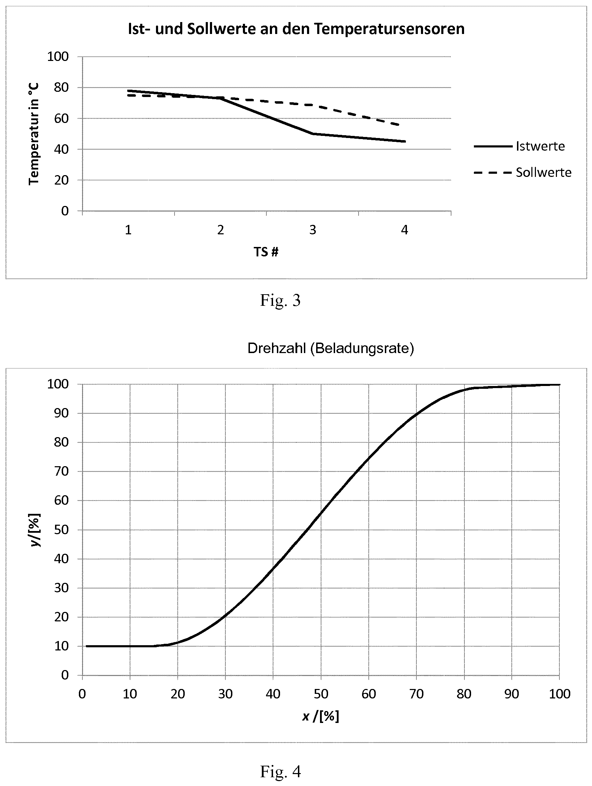

Fig. 3 zeigt eine beispielsweise Gegenüberstellung von vorgegebenen Temperatur-Sollwerten an den vier Temperatursensoren TS1, TS2, TS3, TS4 zu von diesen Temperatursensoren erfassten Temperatur-Istwerten. Erkennbar iast das für Schichtspeicher typische Temperaturgefälle von oben nach unten, also in der Figur von links nach rechts.

Die Messwerte 7TMP, 7FBT der beiden weiteren Temperatursensoren TS3, TS4 können als Vorindikatoren für die Beladungssteuerung verwendet werden. Die Beladung des Pufferspeichers 10 mit dem Wärmeträgermedium kann dann bereits gestartet werden, wenn der eine weitere Temperatursensor TS4 eine Temperatur erfasst, die unterhalb einer vorbestimmten unteren Grenztemperatur liegt, und die Beladung kann beendet werden, wenn der andere weitere Temperatursensor TS3 eine Temperatur erfasst, die oberhalb einer vorbestimmten oberen Grenztemperatur liegt.

Des Weiteren kann die Steuerung der Beladung sowohl ein Ein- und Ausschalten der Beladung als auch eine Änderung der Beladungsrate umfassen. Dann kann, z.B. bei besonders großen Wärmebedarfsspitzen, eine größere Wärmemenge pro Zeiteinheit zugeführt werden, so dass die Temperaturen im Pufferspeicher nicht zu stark sinken.

Für alle Ausführungen gilt, dass die Beladungsrate über die Drehzahl der Pumpe 20 eingestellt wird. Alternativ oder zusätzlich kann die Rate auch über den Öffnungsgrad des Ventils 30 eingestellt werden. Dann bezeichnen die Prozentzahlenden Öffhungsgrad des Ventils 30. Das Ventil 30 kann auch gegen eine laufende Pumpe 20 verstellt werden.

Soll ein sehr häufiges Verändern der Drehzahl der Pumpe vermieden werden, kann vorgesehen sein, dass Temperaturdifferenzen nur dann berücksichtigt werden, wenn sie außerhalb eines jeweiligen vorgegebenen Toleranzbandes liegen.

Die erfindungsgemäße Ausführungsform mit zwei weiteren Temperatursensoren TS3, TS4 bietet sich auch an, die Pumpe mit beliebigen Drehzahlwerten zwischen 0 und 100% zu betreiben. Auf diese Weise entsteht eine geglättete Drehzahl-Zeit-Kurve. In Fig. 5 zeigt die Kurve B einen derartigen Verlauf. Es kann mit kleineren, weniger stark schwankenden Beladungsraten gearbeitet werden.

Mit den durch diese Anordnung erfassten Temperaturen kann ein Regler gespeist werden, der ausgelegt ist, die Schwankungen zu einer vorgegebenen Kombination von Sollwerten für die mehreren Temperaturen T23, 7TMP, 7FBT und T24 aufgrund von Wärmezu-/ und abfuhr in den/ aus dem Pufferspeicher durch Variieren der Pumpendrehzahl, also der Rate, auszuregeln.

Hierbei können die erfassten Temperaturen bzw. die Differenzen zu den jeweiligen Sollwerten unterschiedlich gewichtet werden, um z.B. etwaige Messfehler aufgrund ungünstiger Messbedingungen auszugleichen.

Aus den gewichteten Differenzen zwischen den Sollwerten und den von den Temperatursensoren TS1 bis TS4 erfassten Temperaturen wird ein Wert $x$ ermittelt, der gemäß einer vorgegebenen Kennlinienfunktion einen Wert $y$ für die Stellgröße ergibt, mit der die Drehzahl der Pumpe 20 verstellt wird. Der Wert $x$ kann aus der Summe der gewichteten Differenzen berechnet werden.

Bei einer beispielsweisen Regelung wird auf der Basis der Summe $x$ von gewichteten Differenzen der einzelnen erfassten Temperaturen (Istwerte) T23, 7TMP, 7FBT und T24 zu jeweiligen vordefinierten Temperatur-Sollwerten Wert $y$ gemäß einer Kennlinienfunktion für die einzustellende Drehzahl der Pumpe ermittelt und dann eingeregelt. Eine Kennlinienfunktion hierfür lautet:

$$y = 7 * 10^{-7}x^4 - 0,0007x^3 + 0,0927x^2 - 2,4191x + 21,879,$$

für 15 < $x$ < 85

Für Werte von $0 \leq x \leq 15$ gilt $y = 10$, und für $85 \leq x \leq 100$ ergibt sich eine lineare Fortsetzung der Kennlinie bis 100. Fig. 4 zeigt diese Kennlinie.

Hierbei bedeute x die gewichtete Summe der Temperaturdifferenzen wie zuvor beschrieben und $y$ die einzustellende Pumpendrehzahl im Verhältnis zur maximalen Pumpendrehzahl in Prozent (also die Beladungsrate).

Fig. 6 illustriert eine Fernwärmeübergabestation mit Wärmetauscher 1 mit einem Schichtenpufferspeicher 10, dem die Anordnung zur Steuerung der Beladung gemäß der Erfindung zugeordnet ist. Illustriert sind die vier Temperatursensoren TS1 bis TS4 sowie die von den einzelnen Temperatursensoren TS1 bis TS4 erfassten Temperaturen zusammen mit den zugeordneten Gewichten, mit denen sie in die Berechnung des Wertes von x eingehen. Die angegebenen Werte sind beispielsweise Werte. Hiernach geht der durch den ersten Temperatursensor TS1 gemessene Wert T23 mit 130% in x ein, der durch den zweiten Temperatursensor TS2 gemessene Wert T24 mit 100%, der durch den dritten Temperatursensor TS3 gemessene Wert 7TMP mit 70% und der durch den vierten Temperatursensor TS4 gemessene Wert 7FBT mit 100%. Die Werte werden aufsummiert und ergeben die Eingangsgröße x. Die DDC-Regelung 60 verknüpft die Drehzahl der Ladepumpe 20, die Öffnung des primärseitigen Ventils 30 sowie die Öffnung des Ventils 70, das im Fluss des Wärmeträgermediums auf der Versorgungsnetzseite sitzt.

Eine weitere Ausführungsform der Erfindung sieht vor, die durch die weiteren Temperatursensoren TS3, TS4 erfassten Temperaturen 7TMP, 7FBT nicht oder nicht nur für die Steuerung der Ladepumpe zu verwenden sondern auch der Wärmeerzeugerseite, also dem Fernwärmeproduzenten bereitzustellen. Dann können diese Temperaturen als Vorabinformation (Forecast) über den Wärmebedarf beim Verbraucher verwendet werden. Die Wärmerzeugerseite kann dann noch früher und präziser auf Schwankungen des Wärmebedarfs in Form der Erhöhung oder Verringerung der Wärmeproduktion reagieren.

**Patentansprüche**

1. Anordnung zur Steuerung der Beladung eines Schichten-Pufferspeichers (10) für eine Fernwärmeabnehmerseite, wobei der Schichten-Pufferspeicher (10) einen Vorlaufanschluss (11) zum Zuführen eines Wärmeträgermediums (W) und einen Rücklaufanschluss (12) zum Zurückführen des Wärmeträgermediums (W) aufweist, umfassend:

   einen ersten Temperatursensor (TS1), der zur Erfassung einer ersten Temperatur (T23) des Wärmeträgermediums (W) beim Vorlaufanschluss (11) ausgestaltet ist,
   einen zweiten Temperatursensor (TS2), der zur Erfassung einer zweiten Temperatur (T24) des Wärmeträgermediums (W) beim Rücklaufanschluss (12) ausgestaltet ist,
   eine Steuerung der Beladung des Schichten-Pufferspeichers (10), wobei die Steuerung der Beladung des Schichten-Pufferspeichers (10) ausgestaltet ist, in Abhängigkeit von der erfassten ersten Temperatur (T23) und der erfassten zweiten Temperatur (T24) zu erfolgen,
   wobei zwei weitere Temperatursensoren (TS3, TS4) vorgesehen sind, die zur Erfassung zweier weiterer Temperaturen (7TMP, 7FBT) des Wärmeträgermediums (W) im Schichten-Pufferspeicher (10) zwischen Vorlaufanschluss (11) und Rücklaufanschluss (12) ausgestaltet sind, wobei der eine weitere Temperatursensor (TS4) näher am Rücklaufanschluss (11) angeordnet ist als der andere weitere Temperatursensor (TS3), der seinerseits näher am Vorlaufanschluss (12) angeordnet ist als der eine weitere Temperatursensor (TS4), und die weiteren Temperaturen (7TMP, 7FBT) ebenfalls in die Steuerung der Beladung eingehen,

   **dadurch gekennzeichnet,**
   **dass** die Anordnung weiter ausgestaltet ist, die Beladung des Schichten-Pufferspeichers (10) mit dem Wärmeträgermedium zu starten, wenn der eine weitere Temperatursensor (TS4) eine Temperatur (7FBT) erfasst, die eine vorbestimmte untere Grenztemperatur unterschreitet, und die Beladung zu beenden, wenn der andere weitere Temperatursensor (TS3) eine Temperatur (7TMP) erfasst, die eine vorbestimmte obere Grenztemperatur überschreitet.

2. Anordnung nach Anspruch 1, **dadurch gekennzeichnet, dass** die vorbestimmte obere Grenztemperatur unterhalb eines oberen Grenzwertes der ersten Temperatur (T23) ist und die vorbestimmte untere Grenztemperatur oberhalb eines unteren Grenzwertes der zweiten Temperatur (T24) ist.

3. Anordnung nach einem der vorherigen Ansprüche, **dadurch gekennzeichnet, dass** die Steuerung der Beladung sowohl ein Ein- und Ausschalten der Beladung als auch eine Änderung der Beladungsrate umfasst.

4. Anordnung nach einem der vorherigen Ansprüche, **dadurch gekennzeichnet, dass** eine Regelungseinrichtung (60) vorgesehen ist, welche die Beladung entsprechend einer Kennlinienfunktion einstellt, die gewichtete Differenzen der einzelnen erfassten Temperaturen zu vordefinierten Temperatur-Sollwerten, insbesondere eine Summe (x) der gewichteten Differenzen, mit Beladungsraten (y) verknüpft.

5. Anordnung nach einem der Ansprüche 2 bis 4, **dadurch gekennzeichnet, dass** Mittel zur Einstellung der Beladungsrate über die Drehzahl einer Pumpe (20) und/oder zur Einstellung der Beladungsrate über den Öffnungsgrad eines Ventils (30) vorgesehen sind.

6. Anordnung nach einem der vorherigen Ansprüche, **dadurch gekennzeichnet**, Mittel zur Übertragung einer Information über die zumindest eine weitere erfasste Temperatur (7TMP, 7FBT) an eine Fernwärmeerzeugerseite vorgesehen sind.

7. Schichten-Pufferspeicher (10) für eine Fernwärmeabnehmerseite, umfassend eine Anordnung nach einem der vorherigen Ansprüche.

8. Fernwärmeübergabestation umfassend einen Wärmetauscher (100), der zwischen Fernwärmeabnehmerseite und einem Fernwärmversorgungsnetz angeordnet ist, sowie einen Schichten-Pufferspeicher (10) gemäß dem vorherigen Anspruch, der auf der Fernwärmeabnehmerseite angeordnet ist.

9. Verfahren zum Steuern der Beladung eines Schichten-Pufferspeichers (10) für eine Fernwärmeabnehmerseite, wobei der Schichten-Pufferspeicher (10) einen Vorlaufanschluss (11) zum Zuführen eines Wärmeträgermediums und einen Rücklaufanschluss (12) zum Abführen des Wärmeträgermediums (W) aufweist, wobei

eine erste Temperatur (T23) des Wärmeträgermediums (W) beim Vorlaufanschluss (11) erfasst wird,
eine zweite Temperatur (T24) des Wärmeträgermediums (W) beim Rücklaufanschluss (12) erfasst wird,
wobei die Beladung des Schichten-Pufferspeichers (10) in Abhängigkeit von der erfassten ersten Temperatur (T23) und der erfassten zweiten Temperatur (T24) erfolgt,
wobei zwei weitere Temperaturen (7TMP, 7FBT) des Wärmeträgermediums (W) im Schichten-Pufferspeicher (10) zwischen Vorlaufanschluss (11) und Rücklaufanschluss (12) erfasst werden, wobei die eine weitere Temperatur (7FBT) näher am Rücklaufanschluss (11) erfasst wird als die andere weitere Temperatur (7TMP), die ihrerseits näher am Vorlaufanschluss (12) als die eine weitere Temperatur (7FBT) erfasst wird,

und die weiteren Temperaturen (7TMP, 7FBT) ebenfalls in die Steuerung der Beladung eingehen,
**dadurch gekennzeichnet,**
**dass** das Verfahren weiter ausgestaltet ist, die Beladung des Schichten-Pufferspeichers (10) mit dem Wärmeträgermedium zu starten, wenn die eine weitere erfasste Temperatursensor (7FBT) eine vorbestimmte untere Grenztemperatur unterschreitet, und die Beladung zu beenden, wenn die andere weitere erfasste Temperatur (7TMP) eine vorbestimmte obere Grenztemperatur überschreitet.

10. Verfahren nach Anspruch 9, **dadurch gekennzeichnet, dass** die Steuerung der Beladung sowohl ein Ein- und Ausschalten der Beladung als auch eine Änderung der Beladungsrate umfasst.

11. Verfahren nach einem der Ansprüche 9 oder 10, **dadurch gekennzeichnet, dass** die Beladung vor Erreichen einer vorbestimmten oberen Grenztemperatur am Vorlaufanschluss (11) abgeschwächt und vor Erreichen der unteren Grenztemperatur am Rücklaufanschluss (12) eingeleitet wird.

## Claims

1. Arrangement for controlling the loading of a stratified storage tank (10) for a district heating consumer end, the stratified storage tank (10) having a feed connection (11) for supplying a heat transfer medium (W) and a return connection (12) for returning the heat transfer medium (W), comprising:

   a first temperature sensor (TS1) which is designed to detect a first temperature (T23) of the heat transfer medium (W) at the feed connection (11),
   a second temperature sensor (TS2) which is designed to detect a second temperature (T24) of the heat transfer medium (W) at the return connection (12),
   control of the loading of the stratified storage tank (10), the control of the loading of the stratified storage tank (10) being designed to take place on the basis of the detected first temperature (T23) and the detected second temperature (T24),
   with two further temperature sensors (TS3, TS4) being provided which are designed to detect two further temperatures (7TMP, 7FBT) of the heat transfer medium (W) in the stratified storage tank (10) between the feed connection (11) and the return connection (12), one further temperature sensor (TS4) being arranged closer to the return connection (11) than the other further temperature sensor (TS3), which is arranged closer to the feed connection (12) than the further temperature sensor (TS4),
   and the further temperatures (7TMP, 7FBT) also factoring into the control of the loading,
   **characterized in that**
   the arrangement is further designed to start the loading of the stratified storage tank (10) with the heat transfer medium when one further temperature sensor (TS4) detects a temperature (7FBT) which falls below a predetermined lower limit temperature, and to terminate the loading when the other further temperature sensor (TS3) detects a temperature (7TMP) which exceeds a predetermined upper limit temperature.

2. Arrangement according to claim 1, **characterized in that** the predetermined upper limit temperature is below an upper limit value of the first temperature (T23) and the predetermined lower limit temperature is above a lower limit value of the second temperature (T24).

3. Arrangement according to either of the preceding claims, **characterized in that** the control of the loading comprises both activating and deactivating the loading and changing the loading rate.

4. Arrangement according to any of the preceding claims, **characterized in that** a control device (60) is provided which adjusts the loading according to a characteristic function which links weighted differences of the individual detected temperatures with respect to predefined target temperature values, in particular a sum ($x$) of the weighted differences, with loading rates ($y$).

5. Arrangement according to any of claims 2 to 4, **characterized in that** means are provided for adjusting the loading rate via the speed of a pump (20) and/or for adjusting the loading rate via the degree of opening of a valve (30).

6. Arrangement according to any of the preceding claims, **characterized in that** means are provided for transmitting information regarding the at least one further detected temperature (7TMP, 7FBT) to a district heating generator end.

7. Stratified storage tank (10) for a district heating consumer end comprising an arrangement according to any of the preceding claims.

8. District heating transfer station comprising a heat exchanger (100) arranged between a district heating consumer end and a district heating supply network, and a stratified storage tank (10) according to the preceding claim, which is arranged at the district heating consumer end.

9. Method for controlling the loading of a stratified storage tank (10) for a district heating consumer end, the stratified storage tank (10) having a feed connection (11) for supplying a heat transfer medium and a return connection (12) for conducting the heat transfer medium (W) away,

a first temperature (T23) of the heat transfer medium (W) being detected at the feed connection (11), a second temperature (T24) of the heat transfer medium (W) being detected at the return connection (12), the loading of the stratified storage tank (10) being carried out on the basis of the detected first temperature (T23) and the detected second temperature (T24), with two further temperatures (7TMP, 7FBT) of the heat transfer medium (W) being detected in the stratified storage tank (10) between the feed connection (11) and the return connection (12), one further temperature (7FBT) being detected closer to the return connection (11) than the other further temperature (7TMP), which is detected closer to the feed connection (12) than the further temperature (7FBT), and the further temperatures (7TMP, 7FBT) also factoring into the control of the loading, **characterized in that** the method is further designed to start the loading of the stratified storage tank (10) with the heat transfer medium when one further detected temperature sensor (7FBT) falls below a predetermined lower limit temperature, and to terminate the loading when the other further detected temperature (7TMP) exceeds a predetermined upper limit temperature.

10. Method according to claim 9, **characterized in that** the control of the loading comprises both activating and deactivating the loading and changing the loading rate.

11. Method according to either claim 9 or claim 10, **characterized in that** the loading is attenuated before reaching a predetermined upper limit temperature at the feed connection (11) and is initiated before reaching the lower limit temperature at the return connection (12).

**Revendications**

1. Dispositif de commande de chargement d'un réservoir tampon stratifié (10) pour un consommateur de chauffage urbain, le réservoir tampon stratifié (10) ayant une connexion aller (11) pour fournir un fluide caloporteur (W) et une connexion retour (12) pour renvoyer le fluide caloporteur (W), comprenant :

un premier capteur de température (TS1) conçu pour détecter une première température (T23) du fluide caloporteur (W) au niveau de la connexion aller (11), un second capteur de température (TS2) conçu pour détecter une seconde température (T24) du fluide caloporteur (W) au niveau de la connexion retour (12), une commande de chargement du réservoir tampon stratifié (10), la commande de chargement du réservoir tampon stratifié (10) étant conçue pour avoir lieu en fonction de la première température détectée (T23) et de la seconde température détectée (T24), deux autres capteurs de température (TS3, TS4) étant prévus, qui sont conçus pour détecter deux températures supplémentaires (7TMP, 7FBT) du fluide caloporteur (W) dans le réservoir tampon stratifié (10) entre la connexion aller (11) et la connexion retour (12), l'un capteur de température supplémentaire (TS4) étant disposé plus près de la connexion retour (11) que l'autre capteur de température supplémentaire (TS3), qui à son tour est disposé plus près de la connexion aller (12) que l'un capteur de température supplémentaire (TS4), et les autres températures (7TMP, 7FBT) entrant également dans la commande du chargement, **caractérisé en ce que** le dispositif est en outre conçu pour commencer le chargement du réservoir tampon stratifié (10) avec le fluide caloporteur lorsque l'un capteur de température supplémentaire (TS4) détecte une température (7FBT) qui tombe en dessous d'une température limite inférieure prédéterminée, et pour arrêter le chargement lorsque l'autre capteur de température supplémentaire (TS3) détecte une température (7TMP) qui dépasse une température limite supérieure prédéterminée.

2. Dispositif selon la revendication 1, **caractérisé en ce que** la température limite supérieure prédéterminée est inférieure à une limite supérieure de la première température (T23) et la température limite inférieure prédéterminée est supérieure à une limite inférieure de la deuxième température (T24).

3. Dispositif selon l'une quelconque des revendications précédentes, **caractérisé en ce que** la commande du chargement comprend à la fois le lancement et l'arrêt du chargement et la modification de la vitesse de chargement.

4. Dispositif selon l'une quelconque des revendications précédentes, **caractérisé en ce qu'**il est prévu un dispositif de commande (60) qui ajuste le chargement selon une fonction de courbe caractéristique qui relie les différences pondérées des différentes températures détectées à des valeurs de consigne de température prédéfinies, en particulier une somme (x) des différences pondérées, avec des vitesses de chargement (y).

5. Dispositif selon l'une quelconque des revendications 2 à 4, **caractérisé en ce que** des moyens sont prévus pour régler la vitesse de chargement par la vitesse de rotation d'une pompe (20) et/ou pour régler la vitesse de chargement par le degré d'ouverture d'une soupape (30).

6. Dispositif selon l'une quelconque des revendications précédentes, **caractérisé en ce que** des moyens sont prévus pour transmettre des informations sur l'au moins une autre température détectée (7TMP, 7FBT) à un générateur de chauffage urbain.

7. Réservoir tampon stratifié (10) pour un consommateur de chauffage urbain, comprenant un dispositif selon l'une quelconque des revendications précédentes.

8. Installation de transfert de chauffage urbain comprenant un échangeur de chaleur (100) disposé entre un consommateur de chauffage urbain et un réseau d'alimentation en chauffage urbain, ainsi qu'un réservoir tampon stratifié (10) selon la revendication précédente disposé du côté du consommateur de chauffage urbain.

9. Procédé de commande de chargement d'un réservoir tampon stratifié (10) pour un consommateur de chauffage urbain, le réservoir tampon stratifié (10) présentant une connexion aller (11) pour l'alimentation en fluide caloporteur et une connexion retour (12) pour l'évacuation du fluide caloporteur (W),
une première température (T23) du fluide caloporteur (W) étant détectée au niveau de la connexion aller (11),
une deuxième température (T24) du fluide caloporteur (W) étant détectée au niveau de la connexion retour (12),
le chargement du réservoir tampon stratifié (10) s'effectuant en fonction de la première température détectée (T23) et de la deuxième température détectée (T24),
deux températures supplémentaires (7TMP, 7FBT) du fluide caloporteur (W) étant détectées dans le réservoir tampon stratifié (10) entre la connexion aller (11) et la connexion retour (12), l'une température supplémentaire (7FBT) étant détectée plus près de la connexion retour (11) que l'autre température supplémentaire (7TMP), qui à son tour est détectée plus près de la connexion aller (12) que la température supplémentaire (7FBT),
et les températures supplémentaires (7TMP, 7FBT) entrant également dans la commande du chargement, **caractérisé en ce que** le procédé est en outre conçu pour commencer le chargement du réservoir tampon stratifié (10) avec le fluide caloporteur lorsque l'un capteur de température supplémentaire détecté (7FBT) tombe en dessous d'une température limite inférieure prédéterminée, et pour terminer la charge lorsque l'autre température supplémentaire détectée (7TMP) dépasse une température limite supérieure prédéterminée.

10. Procédé selon la revendication 9, **caractérisé en ce que** la commande du chargement comprend à la fois le lancement et l'arrêt du chargement et la modification de la vitesse de chargement.

**11.** Procédé selon l'une quelconque des revendications 9 ou 10, **caractérisé en ce que** le chargement est ralenti avant d'atteindre une température limite supérieure prédéterminée au niveau de la connexion aller (11) et est initié avant d'atteindre la température limite inférieure au niveau de la connexion retour (12).

Fig. 1

Fig. 2

**Ist- und Sollwerte an den Temperatursensoren**

Fig. 3

Drehzahl (Beladungsrate)

Fig. 4

Fig. 5

Fig. 6

**EP 3 561 395 B1**

**IN DER BESCHREIBUNG AUFGEFÜHRTE DOKUMENTE**

**In der Beschreibung aufgeführte Patentdokumente**

- DE 3312479 A1
- DE 3835096 A1